# EUROPÄISCHE PATENTANMELDUNG

(11) **EP 2 446 740 A2**
(43) Veröffentlichungstag der Anmeldung: **02.05.2012**
(21) Anmeldenummer: 11008615.4
(22) Anmeldetag: 27.10.2011
(51) Int. Cl.: A01M 21/04

(54) **Verfahren und Vorrichtung zur Beeinflussung des Pflanzenwachstums**

(30) Priorität: 27.10.2010 DE 202010014788 U
(71) Anmelder: MTD Products Inc., Valley City, OH 44280 (US)
(72) Erfinder: Gross, Christian, 57250 Netphen (DE)
(74) Vertreter: Feldkamp, Rainer

(57) **Zusammenfassung**

Eine Vorrichtung zur Beeinflussung des Pflanzenwachstums durch Behandlung mit Heißdampf, Heißschaum oder mit einem anderen biologisch abbaubaren, unter Druck stehenden flüssigen und/oder gasförmigen Medium, insbesondere zur Unkrautvernichtung, weist eine Injektorlanze (10) auf, die an einem Ende Anschlussmittel (16, 28) zum Anschluß an ein das unter Druck stehende Medium liefernde Gerät aufweist und die im Bereich ihrer Einsteckspitze (12) eine seitlich nach außen gerichtete Strahldüsen (14) aufweist.

## Beschreibung

Die Erfindung betrifft eine Vorrichtung zur Beeinflussung des Pflanzenwachstums durch Behandlung mit Heißdampf, Heißschaum oder mit einem anderen biologisch abbaubaren, unter Druck stehenden flüssigen und/oder gasförmigen Medium. Insbesondere befasst sich die Erfindung mit einer Vorrichtung zur Unkrautvernichtung.

Nach dem gegenwärtigen Stande der Technik werden die Pflanzen von oben her mit flüssigen oder gasförmigen Medien versorgt, um ihr Wachstum zu beeinflussen. Dies gilt sowohl für Mittel, d.h. Düngemittel, die den Pflanzenwuchs fördern als auch für Mittel, die im Gegensatz dazu den Pflanzenwuchs hindern und die Pflanze vernichten. Das ausgetragene Medium wird dabei von den überirdischen Pflanzenteilen, d.h. Dem Blattwerk oder den Gräsern aufgenommen und verteilt. Dies gilt insbesondere auch für Herbizide, d.h. Unkrautbekämpfungsmittel, die störende Pflanzen abtöten sollen. Derartige Herbizide werden im Allgemeinen in wässriger Lösung entweder bereits zur Behandlung des Saatgutes oder für Unkräuter eingesetzt, die bereits gekeimt und aus dem Boden gewachsen sind. Sowohl beim Einsatz von Herbiziden als auch bei der Verwendung mechanischer Mittel werden im Wesentlichen nur die oberirdischen Pflanzenteile abgetötet und in vielen Fällen bleibt das Wurzelwerk erhalten, so dass bereits nach relativ kurzer Zeit erneut das Wachstum von Unkraut oder Gräsern über dem Boden beobachtet werden kann.

Aus der GB 2 122 511 A ist eine mit Heißdampf arbeitende Vorrichtung bekannt, bei der im Inneren einer auf dem Boden aufsetzbaren Abdeckhaube eine Düse angeordnet ist, der Heißdampf oder heißes Wasser zugeführt wird, das im Inneren der Abdeckhaube austritt und den von dieser Abdeckhaube abgedeckten Bereich beaufschlagt, so dass Unkraut und dergleichen vernichtet wird. Auch hier werden im Wesentlichen nur die oberirdischen Pflanzenteile abgetötet, während das Wurzelwerk, insbesondere bei tief wurzelnden Unkräutern lebensfähig bleibt.

Bei einem weiteren aus der US 5 575 111 bekannten Verfahren wird Heißluft und ein heißer Schaum auf die Bodenoberfläche aufgetragen, wobei die Heißluft die Pflanzen vernichtet und die Wirkung durch den Schaum verstärkt wird, der eine Wärmespeicherung für eine gewisse Zeit ergibt.

Das Aufbringen eines heißen Schaums wird auch gemäß der US 5 622 123 zur Isolation der Bodenoberfläche eines zu sterilisierenden Bodenbereiches verwendet, in den vorher über einen einem Pflug ähnliche Strukturen Heißdampf eingeleitet wurde.

Zur Bekämpfung von Ameisen ist es weiterhin aus der US 7 797 878 bekannt, Heißdampf über eine lanzenartige Struktur in einen Ameisenhügel einzuleiten, wobei die lanzenartige Struktur an ihrem oberen, im Gebrauch oberhalb der Bodenoberfläche bleibenden Bereich durch eine Abdeckhaube abgedeckt ist.

Der Erfindung liegt daher die Aufgabe zugrunde, ein Verfahren und eine Vorrichtung zur Beeinflussung des Pflanzenwuchses derart auszugestalen, dass die beabsichtigte Wirkung langzeitig erhalten bleibt. Insbesondere soll bei der Unkrautbekämpfung ein erneutes Wachstum verhindert werden.

Diese Aufgabe wird durch die in denAnsprüchen 1 bzw. 11 angegebenen Merkmale gelöst.

Vorteilhafte Ausgestaltungen und Weiterbildungen der Erfindung ergeben sich aus den Unteransprüchen.

Gemäß der Erfindung wird eine Behandlung der unterirdischen Pflanzenteile, d.h. eine Bearbeitung des Wurzelwerkes bewirkt, was zur Folge hat, dass im Falle der Unkrautbekämpfung ein Nachwachsen verhindert wird, während zur Wachstumsbeschleunigung entsprechende Medien positiv auf das Wachstum der Pflanze einwirken können, um den angestrebten Erfolg zu erreichen.

Eine Vorrichtung zur Lösung der gestellen Aufgabe ist im Anspruch 1 gekennzeichnet. Mit dieser Vorrichtung können die verschiedensten Verfahrensschritte durchgeführt werden. Es können in Wasser gelöste Düngemittel oder chemische biologisch abbaubare Düngemittel oder Stoffe, die das Wachstum der Pflanze hemmen, in unmittelbare Nähe des Wurzelwerkes eingebracht werden.

Insbesondere ist gemäß der Erfindung vorgesehen, die Unkrautbekämpfung mittels Heißdampf vorzunehmen und über die erfindungsgemäße Vorrichtung den Heißdampf auf die Wurzeln des Unkrauts zu richten. Es hat sich gezeigt, dass hierdurch eine dauerhafte Vernichtung von Unkraut möglich wird. Zur Heißdampferzeugung können spezielle Geräte Anwendung finden, die auch für die Oberflächenbehandlung, insbesondere in landwirtschaftlichen Betrieben eingesetzt werden. Zur Speisung der erfindungsgemäßen Vorrichtung sind jedoch auch Heißdampfgeräte verwendbar, wie sie vielfach im Haushalt zu Reinigungszwecken eingesetzt werden. Auf diese Weise wird es dem Gartenbesitzer möglich, sein im Haushalt bereits verwendetes Gerät oder Dampferzeuger im Allgemeinen erfolgreich für die Unkrautbekämpfung einzusetzen.

Die erfindungsgemäße Vorrichtung bietet sich daher als Zusatzgerät für bereits vorhandene ein unter Druck stehendes Medium liefernde Geräte, insbesondere Heißampfgeräte oder Hocdruckreiniger, an, die im Haushalt für Reinigungszwecke Verwendung finden. Es erfolgt dann ein Anschluss des Gerätes an ein rohrartiges Werkzeugteil des Gerätes, erforderlichenfalls unter Verwendung eines Adapters.

Nachstehend werden Ausführungsbeispiele der Erfindung anhand der Zeichnung beschrieben. In der Zeichnung zeigen:
Figur 1 zeigt in verschiedenen Ansichten eine einzelne Injektorlanze mit Handgriff und Anschlussteil.
Figur 2 verschiedene Ansichten von drei zu einem Bündel zusammengefassten Injektorlanzen.
Figur 3 verschiedene Ansichten einer zum Boden abdichtenden Heißdampfhaube mit Lanzenstrahlführung.

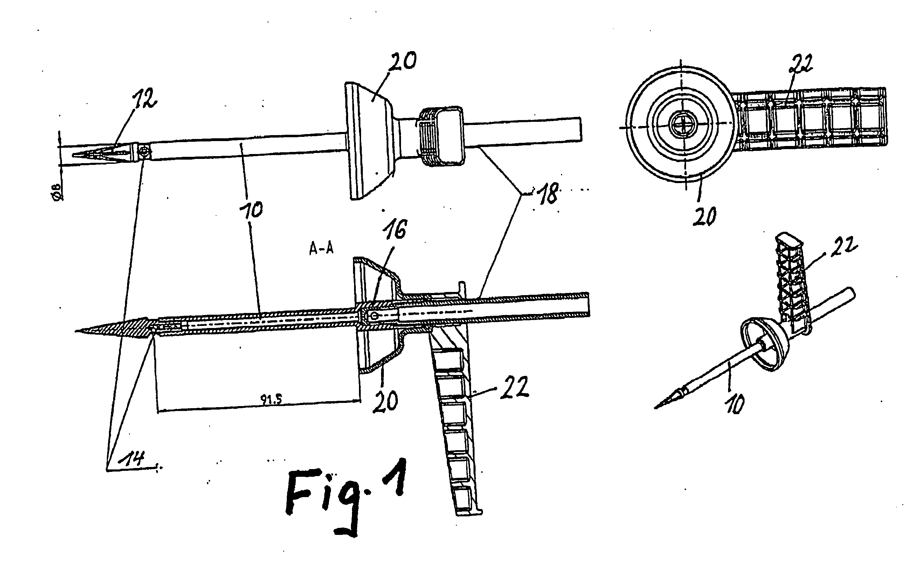

Die Figur 1 zeigt eine einzelne Injektorlanze 10 mit in den Boden einführbarer Spitze 12 und zumindest einer im Wesentlichen unter einem rechten Winkel zur Längsachse der Injektorlanze 10 seitlich nach außen gerichteten Strahldüse 14, die unmittelbar über dem Spitzenbereich an einer Stelle angeordnet ist, an der bei im Boden eingeführter Lanze eine möglichst direkte Beaufschlagung des Wurzelwerkes möglich ist.

Die Injektorlanze ist im Bereich der Düsenaustrittsöffnung verjüngt und im Durchmesser dünner als die Spitze 12, so dass der Heißdampf in die beim Einstechen der Spitze 12 in die Erde hinter der Spitze gebildete Hohlkammer den Austritt des Heißdampfes und/oder eines anderen Mediums in die Erde erleichtert und ein Verstopfen der Strahldüse 14 durch Schmutzpartikel ausgeschlossen werden kann.

An dem der Spitze gegenüberliegenden hinteren Ende trägt die Injektorlanze 10 eine im Durchmesser erweiterte Hülse 16, die gegebenenfalls über einen Adapter auf ein Zubehörrohr 18 eines Gerätes aufsteckbar oder aufschraubbar ist, das einen unter Druck stehenden Heißdampf erzeugt, dem auch ein die Wirkung des Heißdampfes verstärkendes Medium beigefügt sein kann.

Durch die Verwendung der Hülse 16 und/oder des Adapters können vorhandene Geräte zur Erzeugung von Heißdampf in Verbindung mit der erfindungsgemäßen Vorrichtung verwendet werden.

Auf die Hülse 16 ist eine Schutzkappe 20 aufgeschoben, die die Bedienungsperson vor etwa austretenden Dampf schützen soll. Die Aufsatzhülse dieser Schutzkappe ist mit einem Handgriff und/oder einer Fußstütze 22 verbunden, mit dem bzw. mit der die Bedienungsperson die Injektorlanze führen kann.

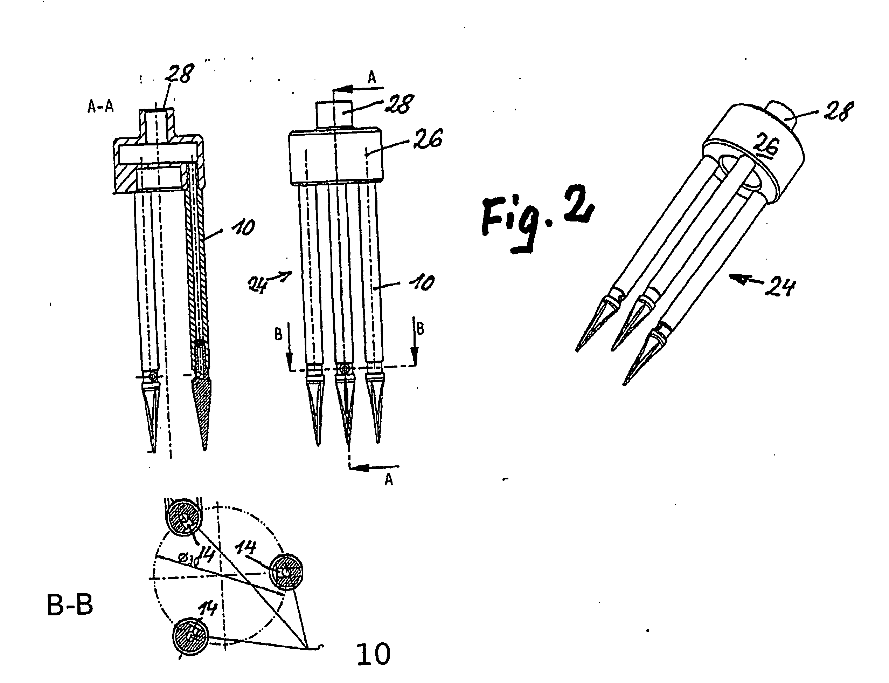

Figur 2 zeigt die Anordnung von drei Injektorlanzen 10 zu einem Lanzenbündel 24. In ihrem Kopfteil 26 stehen die Lanzen mit ihrem Eintritt und dem gemeinsamen Zuführungsrohr in Verbindung. Die Hülse 28 dient wiederum zum Aufsatz auf das Zuführungsrohr, gegebenenfalls über einen Adapter. Die Lanzen sind auch hier im Bereich der Düsenaustrittsöffnung verjüngt und im Durchmesser dünner wie die Spitze so dass der Heißdampf in die Hohlkammer in der Erde besser austreten kann und somit ein Verstopfen des Austritts durch Schmutzpartikel ausgeschlossen werden kann.

Die Strahldüsen der drei Injektorlanzen sind konzentrisch nach innen gerichtet. Diese Ausführungsform eignet sich im besonderen Maße zum Abtöten von Unkrautstauden, deren Wurzelwerk auf diese Weise von drei Seiten her konzentrisch beaufschlagt werden kann.

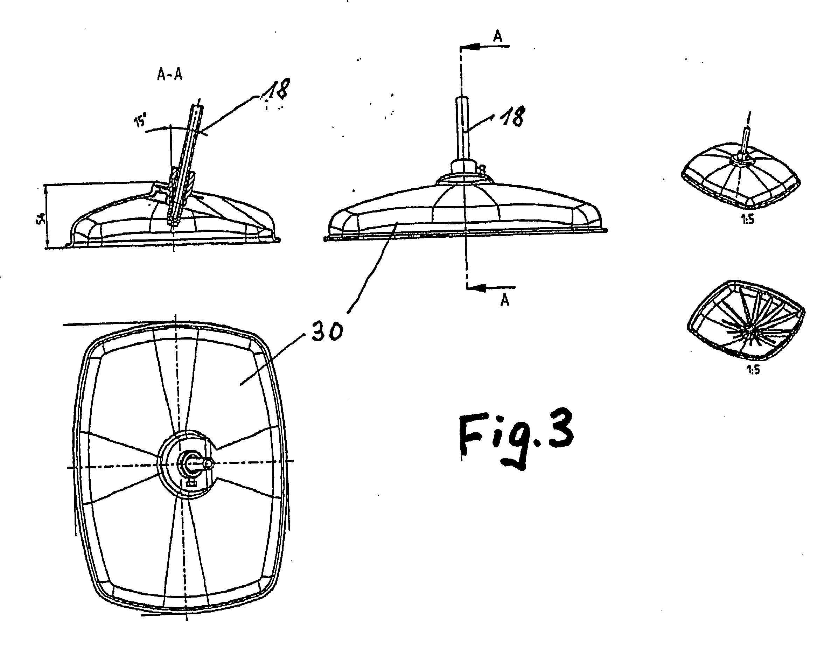

Die Figur 3 zeigt eine zum Boden abdichtende Heißdampfhaube 30 mit Lanzenstrahlführung, die mit ihren Rändern dicht auf den Boden beispielsweise eine Plattenanordnung, aufgesetzt werden kann, um zusätzlich von oben her eine Abtötung oberirdischen Unkrauts zu ermöglichen. In das Innere der Abdeckkappe steht eine Injektionslanze oder das Zubehöranschlussrohr 18 ein.

## Patentansprüche

1. Vorrichtung zur Beeinflussung des Pflanzenwachstums durch Behandlung mit Heißdampf, Heißschaum oder mit einem anderen biologisch abbaubaren, unter Druck stehenden flüssigen und/oder gasförmigen Medium, insbesondere zur Unkrautvernichtung, **gekennzeichnet durch** eine Injektorlanze (10), die an einem Ende Anschlussmittel (16, 28) zum Anschluß an ein das unter Druck stehende Medium liefernde Gerät aufweist und die im Bereich ihrer Einsteckspitze (12) eine seitlich nach außen gerichtete Strahldüsen (14) aufweist.

2. Vorrichtung nach Anspruch 1, **dadurch gekennzeichnet, dass** die Strahldüse (14) in der Injektorlanze (10) im Wesentlichen unter einem rechten Winkel seitlich zur Längsachse der Injektorlanze (10) verlaufend angeordnet und im Boden gezielt auf den Wurzelbereich der zu behandelnden Pflanze ausrichtbar ist.

3. Vorrichtung nach Anspruch 1 oder 2, **dadurch gekennzeichnet, dass** die Strahldüse (14) und die Strahlrichtung an einer äußeren Markierung erkennbar ist.

4. Vorrichtung nach Anspruch 1 oder 2, **dadurch gekennzeichnet, dass** mehrere Injektorlanzen (10) zu einem Bündel (24) zusammengefasst und mit ihren Achsen auf einem Kreisumfang angeordnet sind, wobei ihre Strahldüsen (14) konzentrisch nach innen gerichtet sind.

5. Vorrichtung nach Anspruch 4, bei welcher drei Injektorlanzen zu einem Bündel zusammengefasst sind, die parallel zueinander im gleichen Winkelabstand zueinander angeordnet sind.

6. Vorrichtung nach Anspruch 4 oder 5, **dadurch gekennzeichnet, dass** das Bündel in einem Kopfstück (26) zusammengefasst ist, das ein gemeinsames Anschlussmittel (28) aufweist.

7. Vorrichtung nach einem der Ansprüche 1 - 6, **dadurch gekennzeichnet, dass** der Übergangsbereich zwischen der Injektorlanze (10) und deren Einsteckspitze (1), in dem die Strahldüsen (14) angeordnet sind, einen gegenüber dem hinteren Ende der Spitze verringerten Durchmesser aufweist, so dass beim Einstechen der Spitze in die Erde hinter der Spitze eine Hohlkammer gebildet wird, die den Austritt des Heißdampfes in die Erde erleichtert.

8. Vorrichtung nach einem der vorhergehenden Ansprüche, **dadurch gekennzeichnet, dass** die Anschlußmittel (16, 28) eine Hülse aufweisen, auf die ein Adapter und/oder ein Zubehörrohr (18) das unter Druck stehende Medium liefernde Gerät aufsteckbar oder aufschraubbar ist.

9. Vorrichtung nach Anspruch 8, **dadurch gekennzeichnet, dass** eine Schutzkappe (20) auf der Hülse (16, 28) festlegbar ist.

10. Vorrichtung nach einem der vorhergehenden Ansprüche, **dadurch gekennzeichnet, dass** ein Handgriff (22) und/oder eine Fußstütze an der Injektorlanze (10) festlegbar ist.

11. Vorrichtung nach einem der vorhergehenden Ansprüche, **gekennzeichnet durch** eine zum Boden abdichtende Heißdampfhaube (30), die mit einem Anschluss (18) zum Einführen eines auf den Boden ausgerichteten Strahls ausgerichtet ist.

12. Verfahren zur Unkrautvernichtung durch Behandlung der Wurzeln mit einer Vorrichtung nach einem der Ansprüche 1 ― 11.
